# EUROPEAN PATENT APPLICATION

(11) **EP 4 307 758 A1**
(43) Date of publication of application: **17.01.2024**
(21) Application number: 21930133.0
(22) Date of filing: 10.03.2021
(51) Int. Cl.: H04W 24/10

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2021/009592
(87) International publication number: WO 2022/190278

(57) **Abstract**

A terminal according to one aspect of the present disclosure includes: a receiving section that receives one channel state information (CSI) report configuration including both a configuration of a reference signal of a serving cell and a configuration of a reference signal of a non-serving cell; and a control section that controls transmission of a CSI report including information indicating the serving cell or the non-serving cell, based on the one CSI report configuration. According to one aspect of the present disclosure, appropriate CSI reporting for a non-serving cell can be performed.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

In existing LTE systems (for example, 3GPP Rel. 8 to Rel. 14), a user terminal (User Equipment (UE)) transmits uplink control information (UCI) by using at least one of a UL data channel (for example, a Physical Uplink Shared Channel (PUSCH)) and a UL control channel (for example, a Physical Uplink Control Channel (PUCCH)).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems, layer 1 / layer 2 (L1/L2) inter-cell mobility that facilitates more efficient DL/UL beam management (that achieves lower latency and overhead) is studied.

In L1/L2 inter-cell mobility, serving cell change is possible by using a function such as beam control without radio resource control (RRC) reconfiguration. In other words, transmission/reception to/from a non-serving cell is possible without handover. Since a data incommunicable period occurs due to the necessity of RRC reconnection and the like for handover, L1/L2 inter-cell mobility with no necessity of handover is preferable.

However, it has not been sufficiently studied about CSI reporting for a reference signal of a non-serving cell in previous NR specifications. Accordingly, appropriate CSI reporting for the non-serving cell may fail to be performed.

Thus, an object of the present disclosure is to provide a terminal, a radio communication method, and a base station that can perform appropriate CSI reporting for a non-serving cell.

### Solution to Problem

A terminal according to one aspect of the present disclosure includes: a receiving section that receives one channel state information (CSI) report configuration including both a configuration of a reference signal of a serving cell and a configuration of a reference signal of a non-serving cell; and a control section that controls transmission of a CSI report including information indicating the serving cell or the non-serving cell, based on the one CSI report configuration.

### Advantageous Effects of Invention

According to one aspect of the present disclosure, appropriate CSI reporting for a non-serving cell can be performed.

### Brief Description of Drawings

[FIG. 1] FIGS. 1A to 1D are diagrams to show examples of a multi-TRP scenario.
[FIG. 2] FIG. 2A is a diagram to show an example of intra-cell TRPs. FIG. 2B is a diagram to show an example of inter-cell TRPs.
[FIG. 3] FIG. 3 is a diagram to show an overview of a CSI report configuration for RRC.
[FIG. 4] FIG. 4A is a diagram to show part of a CSI resource configuration for RRC. FIG. 4B is a diagram to show part of a CSI-SSB resource set.
[FIG. 5] FIG. 5 is a diagram to show a first example of CSI-SSB-ResourceSet.
[FIG. 6] FIG. 6 is a diagram to show a second example of CSI-SSB-ResourceSet.
[FIG. 7] FIG. 7 is a diagram to show an example of a CSI report in a case where Aspect 1-1 and Aspect 1-2 are applied.
[FIG. 8] FIG. 8 is a diagram to show an example of a CSI report in a case where Aspect 1-3 is applied.
[FIG. 9] FIG. 9 is a diagram to show an example of a CSI report with ordering according to the strengths of L1-RSRPs/L1-SINRs.
[FIG. 10] FIG. 10 is a diagram to show an example of a CSI report taking into account of a serving cell / non-serving cell for ordering.
[FIG. 11] FIG. 11 is a diagram to show an example of a CSI report of Aspect 1-4.
[FIG. 12] FIG. 12 is a diagram to show an example of a CSI report in Option 1 of Aspect 3-1.
[FIG. 13] FIG. 13 is a diagram to show a first example of a CSI report in Option 2 of Aspect 3-1.
[FIG. 14] FIG. 14 is a diagram to show a second example of a CSI report in Option 2 of Aspect 3-1.
[FIG. 15] FIG. 15 is a diagram to show an example of a CSI report in Option 3 of Aspect 3-1.
[FIG. 16] FIG. 16 is a diagram to show a variation of a CSI report in Option 1 of Aspect 3-1.
[FIG. 17] FIG. 17 is a diagram to show a variation of a CSI report in Option 2 of Aspect 3-1.
[FIG. 18] FIG. 18 is a diagram to show an example of a CSI report in Option 1 of a fourth embodiment.
[FIG. 19] FIG. 19 is a diagram to show an example of a CSI report in Option 2 and Option 3 of the fourth embodiment.
[FIG. 20] FIG. 20 is a diagram to show an example of a CSI report in Option 1 of a fifth embodiment.
[FIG. 21] FIG. 21 is a diagram to show a first example of a CSI report in Option 2 and Option 3 of the fifth embodiment.
[FIG. 22] FIG. 22 is a diagram to show a second example of a CSI report in Option 2 and Option 3 of the fifth embodiment.
[FIG. 23] FIG. 23 is a diagram to show a third example of a CSI report in Option 2 and Option 3 of the fifth embodiment.
[FIG. 24] FIG. 24 is a diagram to show an example of a schematic structure of a radio communication system according to one embodiment.
[FIG. 25] FIG. 25 is a diagram to show an example of a structure of a base station according to one embodiment.
[FIG. 26] FIG. 26 is a diagram to show an example of a structure of a user terminal according to one embodiment.
[FIG. 27] FIG. 27 is a diagram to show an example of a hardware structure of the base station and the user terminal according to one embodiment.

### Description of Embodiments

### (CSI Reporting)

In NR, a UE measures a channel state by using a certain reference signal (or a resource for the reference signal) and feeds back (reports) channel state information (CSI) to a base station.

The UE may measure the channel state by using a channel state information-reference signal (CSI-RS), a synchronization signal / broadcast channel (Synchronization Signal / Physical Broadcast Channel (SS/PBCH)) block, a synchronization signal (SS), a demodulation reference signal (DMRS), and the like.

A CSI-RS resource may include at least one of a non-zero power (NZP) CSI-RS and CSI-Interference Management (IM). The SS/PBCH block is a block including a synchronization signal (for example, a primary synchronization signal (PSS)), a secondary synchronization signal (SSS), and a PBCH (and a corresponding DMRS), and may be referred to as an SS block (SSB) or the like. An SSB index may be given for the time position of an SSB in a half frame.

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), Layer 1 (L1)-Reference Signal Received Power (RSRP) (reference signal received power in Layer 1), L1-Reference Signal Received Quality (RSRQ), an L1-Signal to Interference plus Noise Ratio (SINR), an L1-Signal to Noise Ratio (SNR), and the like.

The CSI may have a plurality of parts. A first part of the CSI (CSI part 1) may include information with a relatively small number of bits (for example, the RI). A second part of the CSI (CSI part 2) may include information with a relatively large number of bits (for example, CQI) such as information defined based on CSI part 1.

As a method for feeding back the CSI, (1) periodic CSI (P-CSI) reporting, (2) aperiodic CSI (A (AP)-CSI) reporting, (3) semi-persistent (semi-permanent) CSI reporting (SP-CSI) reporting, and the like are under study.

The UE may be notified of information related to CSI reporting (which may be referred to as CSI report configuration information) by using one of or a combination of higher layer signaling and physical layer signaling (for example, downlink control information (DCI)). The CSI report configuration information may be configured by using an RRC information element "CSI-ReportConfig," for example.

Here, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (MAC PDU), or the like. The broadcast information may be, for example, a master information block (MIB), a system information block (SIB), minimum system information (Remaining Minimum System Information (RMSI)), other system information (OSI), or the like.

The CSI report configuration information may include information related to reporting periodicity, an offset, and the like, for example, which may be expressed in a certain time unit (unit of slots, unit of subframes, unit of symbols, or the like). The CSI report configuration information may include a configuration ID (CSI-ReportConfigId). A parameter of reporting periodicity or the like such as the type of a CSI reporting method (whether SP-CSI, or the like) may be identified by the configuration ID. The CSI report configuration information may include information (CSI-ResourceConfigId) indicating a CSI measured by using which signal (or resource for which signal) to report.

### (Beam Management)

For Rel-15 NR thus far, a beam management (BM) method has been studied. In the beam management, beam selection based on L1-RSRP reported by the UE is under study. Changing (switching) a beam of a certain signal/channel may correspond to changing a (Transmission Configuration Indication state) for the signal/channel.

Note that a beam selected by beam selection may be a transmit beam (Tx beam) or may be a receive beam (Rx beam). The beam selected by beam selection may be a UE beam or may be a base station beam.

The UE may report (transmit) a measurement result for beam management by using a PUCCH or a PUSCH. The measurement result may be CSI including at least one of an L1-RSRP, an L1-RSRQ, an L1-SINR, an L1-SNR, and the like, for example. The measurement result may be referred to as beam measurement, a beam measurement result, a beam report, a beam measurement report, and the like.

CSI measurement for beam reporting may include interference measurement. The UE may measure channel quality, interference, and the like by using a resource for CSI measurement and derive a beam report. The resource for CSI measurement may be at least one of a resource of an SS/PBCH block, a resource of a CSI-RS, a different reference signal resource, or the like, for example. Configuration information of a CSI measurement report may be configured for the UE by using higher layer signaling.

The beam report may include at least one of results of channel quality measurement and interference measurement. The result of the channel quality measurement may include an L1-RSRP, for example. The result of the interference measurement may include an L1-SINR, an L1-SNR, an L1-RSRQ, a different index related to interference (for example, any index other than the L1-RSRP), or the like.

Note that the resource for CSI measurement for beam management may be referred to as a resource for beam measurement. A signal/channel targeted for the CSI measurement may be referred to as a beam measurement signal. The CSI measurement/reporting may be interpreted as at least one of measurement/reporting for beam management, beam measurement/reporting, radio link quality measurement/reporting, and the like.

CSI report configuration information taking into account of current NR beam management is included in an RRC information element "CSI-ReportConfig." Information in the RRC information element "CSI-ReportConfig" will be described.

The CSI report configuration information (CSI-ReportConfig) may include report quantity information ("report quantity" which may be expressed by an RRC parameter "reportQuantity"), which is information of a parameter to be reported. The report quantity information may be defined in the form of ASN.1 object called "choice." Hence, one of parameters defined as the report quantity information (such as cri-RSRP and ssb-Index-RSRP) is configured.

The UE configured with the higher layer parameter (for example, an RRC parameter "groupBasedBeamReporting") included in the CSI report configuration information being enabled may include, in a beam report, a plurality of resource IDs for beam measurement (for example, SSBRIs and CRIs) and a plurality of measurement results (for example, L1-RSRPs) corresponding to the resource IDs for each report configuration.

The UE configured with the number of report target RS resources being one or more by the higher layer parameter (for example, an RRC parameter "nrofReportedRS") included in the CSI report configuration information may include, in a beam report, one or more resource IDs for beam measurement and one or more measurement results (for example, an L1-RSRP(s)) corresponding to the resource ID(s) for each report configuration.

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have a different parameter(s) (or a parameter set(s)) that can be assumed to be the same, and such parameters (which may be referred to as QCL parameters) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An information element of the TCI state ("TCI-state IE" of RRC) configured using higher layer signaling may include one or a plurality of pieces of QCL information ("QCL-Info"). The QCL information may include at least one of information related to the RS to have a QCL relationship (RS relation information) and information indicating a QCL type (QCL type information). The RS relation information may include information such as an index of the RS (for example, an SSB index or a non-zero power CSI-RS (NZP CSI-RS) resource ID (Identifier)), an index of a cell in which the RS is located, and an index of a Bandwidth Part (BWP) in which the RS is located.

In Rel-15 NR, as a TCI state of at least one of a PDCCH and a PDSCH, both an RS of QCL type A and an RS of QCL type D or only an RS of QCL type A can be configured for a UE.

In a case where a TRS is configured as an RS of QCL type A, it is assumed that the same TRS is transmitted periodically over a long time period, unlike a demodulation reference signal (DMRS) of a PDCCH or a PDSCH. The UE measures the TRS to thereby be able to calculate an average delay, delay spread, and the like.

The UE configured with the TRS as the RS of QCL type A in the TCI state of the DMRS of the PDCCH or the PDSCH can assume that the parameters (average delay, delay spread, or the like) of QCL type A are the same for the DMRS of the PDCCH or the PDSCH and the TRS and can hence obtain the parameter (average delay, delay spread, or the like) of type A of the DMRS of the PDCCH or the PDSCH from the measurement result of the TRS. When the UE performs channel estimation for at least one of the PDCCH and the PDSCH, the UE can use the measurement result of the TRS to perform channel estimation at higher accuracy.

The UE configured with an RS of QCL type D can determine a UE receive beam (spatial domain reception filter, UE spatial domain reception filter) by using the RS of QCL type D.

An RS of QCL type X in a TCI state may mean an RS in a relationship of QCL type X with (a DMRS of) a certain channel/signal, and this RS may be referred to as a QCL source of QCL type X in the TCI state.

### (Multi-TRP)

For NR, it is studied that one or a plurality of
transmission/reception points (TRPs) (multi-TRP) perform DL transmission to a UE by using one or a plurality of panels (multi-panel). It is also studied that the UE performs UL transmission to the one or plurality of TRPs.

Note that the plurality of TRPs may correspond to the same cell identifier (ID) or may correspond to different cell IDs. The cell ID may be a physical cell ID or a virtual cell ID.

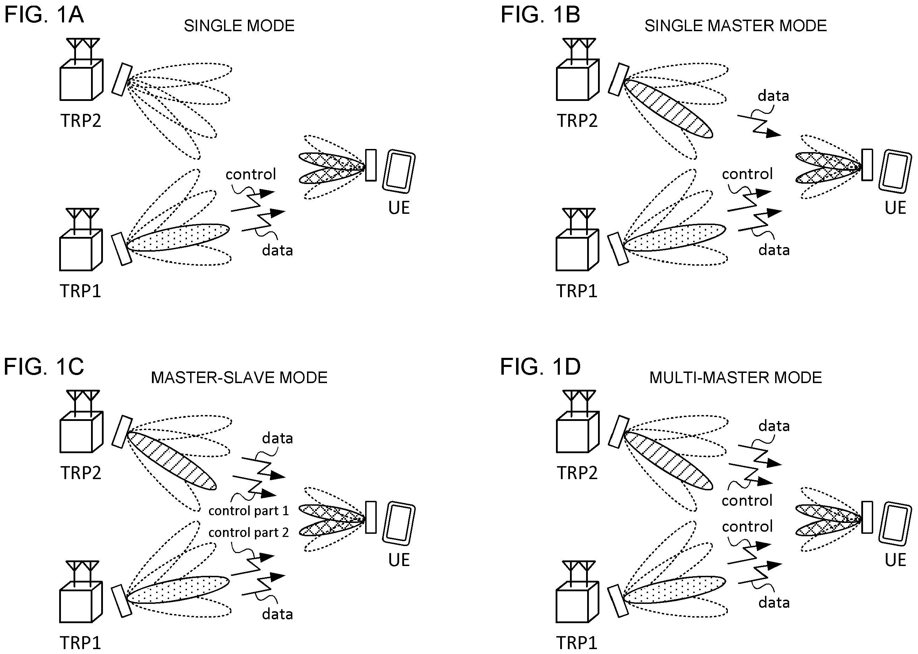

FIGS. 1A to 1D are diagrams to show examples of a multi-TRP scenario. In these examples, it is assumed that each TRP can transmit four different beams, but this is not restrictive.

FIG. 1A shows an example of a case where only one TRP (TRP1 in this example) of multi-TRP performs transmission to a UE (which may be referred to as a single mode, a single TRP, and the like). In this case, TRP1 transmits both a control signal (PDCCH) and a data signal (PDSCH) to the UE.

FIG. 1B shows an example of a case where only one TRP (TRP1 in this example) of the multi-TRP transmits a control signal to the UE and the multi-TRP transmits data signals (which may be referred to as a single master mode). The UE receives PDSCHs transmitted from the multi-TRP, based on one piece of downlink control information (DCI).

FIG. 1C shows an example of a case where each of the multi-TRP transmits part of a control signal to the UE and the multi-TRP transmits data signals (which may be referred to as a master-slave mode). TRP1 may transmit part 1 of the control signal (DCI), and TRP2 may transmit part 2 of the control signal (DCI). Part 2 of the control signal may depend on part 1. The UE receives the PDSCHs transmitted from the multi-TRP, based on these parts of DCI.

FIG. 1D shows an example of a case where each of the multi-TRP transmits a separate control signal to the UE and the multi-TRP transmits data signals (which may be referred to as a multi-master mode). TRP1 may transmit a first control signal (DCI), and TRP2 may transmit a second control signal (DCI). The UE receives the PDSCHs transmitted from the multi-TRP, based on these pieces of DCI.

When a plurality of PDSCHs from multi-TRP (which may be referred to as multi-PDSCH (multiple PDSCHs)) are scheduled by using one piece of DCI as in FIG. 1B, the DCI may be referred to as single DCI (single PDCCH). When a plurality of PDSCHs from multi-TRP are scheduled by using a plurality of pieces of DCI as in FIG. 1D, the plurality of pieces of DCI may be referred to as multi-DCI (multi-PDCCH (multiple PDCCHs)) .

Each TRP of the multi-TRP may transmit a different codeword (Code Word (CW)) and a different layer. As one mode of multi-TRP transmission, non-coherent joint transmission (NCJT) is studied.

In NCJT, for example, TRP1 performs modulation mapping on a first codeword, performs layer mapping, and transmits a first PDSCH in layers of a first number (for example, two layers) by using first precoding. TRP2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

For URLLC for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, for example, schemes 1, 2a, 2b, 3, and 4). In scheme 1, multi-PDSCH from multi-TRP is space division multiplexed (SDMed). In schemes 2a and 2b, PDSCHs from multi-TRP is frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP is time division multiplexed (TDMed). In scheme 3, multi-PDSCH from multi-TRP is transmitted in one slot. In scheme 4, multi-PDSCH from multi-TRP is transmitted in different slots.

According to such a multi-TRP scenario, more flexible transmission control using a channel with high quality is possible.

In the multi-master mode as in FIG. 1D, a configuration that the same physical cell ID is configured for a plurality of TRPs (intra-TRP mobility, intra-cell TRP mobility, intra-cell mobility, or intra-cell multi-TRP operation) and a configuration that different physical cell IDs are configured for a plurality of TRPs (inter-TRP mobility, inter-cell TRP mobility, inter-cell mobility, or inter-cell multi-TRP operation) are considered.

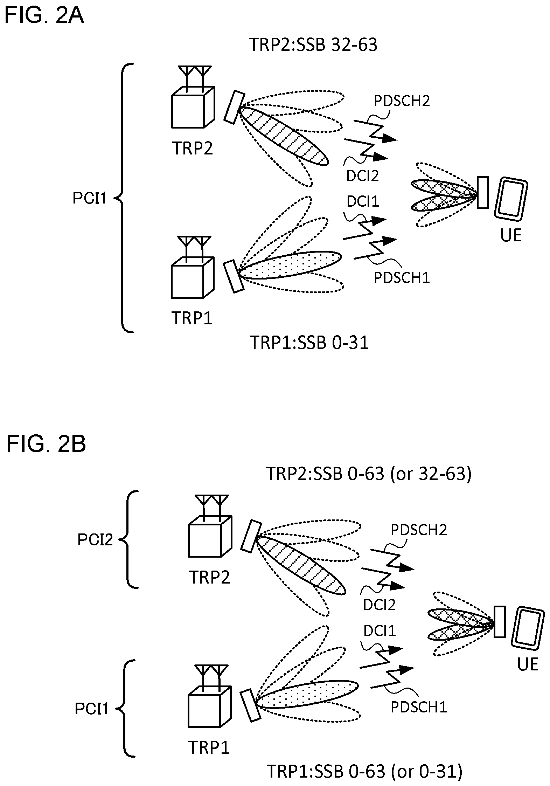

FIG. 2A is a diagram to show an example of intra-cell mobility. As shown in FIG. 2A, the same physical cell ID (PCI1) is configured for TRP1 and TRP2. In this case, an SSB (SSBindex) transmitted from TRP1 and an SSB transmitted from TRP2 need be different from each other. In the example in FIG. 2A, the SSBs of TRP1 are 0 to 31, while the SSBs of TRP2 are 32 to 63.

FIG. 2B is a diagram to show an example of inter-cell mobility. As shown in FIG. 2B, different physical cell IDs (PCI1, PCI2) are configured for TRP1 and TRP2. In this case, an SSB transmitted from TRP1 and an SSB transmitted from TRP2 may overlap or may be different from each other. In the example in FIG. 2B, the SSBs of TRP1 and TRP2 may be both 0 to 63. Alternatively, the SSB of TRP1 may be 0 to 31, while the SSB of TRP2 may be 32 to 63. In this case, an RS in a TCI state of PDSCH1/PDSCH2 is PCI1 or PCI2,

### (CSI Report Configuration and CSI Resource Configuration for RRC)

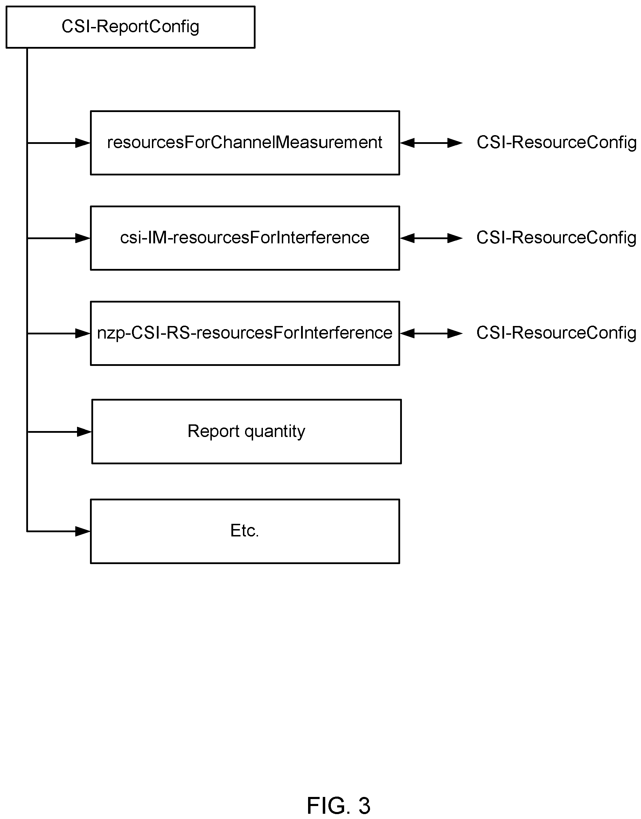

FIG. 3 is a diagram to show an overview of a CSI report configuration for RRC. FIG. 3 shows a CSI report configuration for RRC of 3GPP Rel. 15/16. As shown in FIG. 3, a CSI report configuration (CSI-ReportConfig) includes "resourcesForChannelMeasurement," "csi-IM-resourcesForInterference," "nzp-CSI-RS-resourcesForInterference," "Report quantity," and the like. "resourcesForChannelMeasurement," "csi-IM-resourcesForInterference," and "nzp-CSI-RS-resourcesForInterference" correspond to a CSI resource configuration "CSI-ResourceConfig" (CSI-ResourceConfigId).

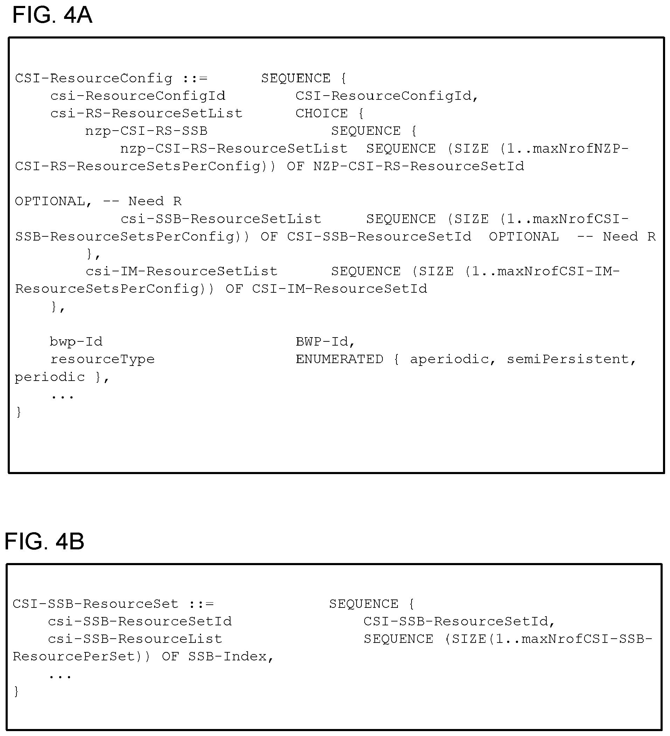

FIG. 4A is a diagram to show part of a CSI resource configuration for RRC. FIG. 4B is a diagram to show part of a CSI-SSB resource set. FIGS. 4A and 4B show a configuration of RRC of 3GPP Rel. 15/16. As shown in FIG. 4A, the CSI resource configuration (CSI-ResourceConfig) includes "CSI-SSB-ResourceSetId." As shown in FIG. 4B, the CSI-SSB-resource set (CSI-SSB-ResourceSet) includes "CSI-SSB-ResourceSetId" and "SSB-Index."

### (Configuration of RS of Serving Cell / Non-serving Cell)

Application of a first example and a second example below, for example, is conceivable for L1 (Layer 1) CSI reporting by an RS (for example, an SSB) of the non-serving cell and a relationship between L1 CSI reporting in the serving cell and L1 CSI reporting in the non-serving cell.

### <First Example>

Separate channel state information (CSI) report configurations (CSI-ReportConfig) may be configured for an RS of the serving cell and an RS of the non-serving cell. For example, when a synchronization signal block (SSB) is configured for L1 CSI reporting in CSI-ReportConfig, the RS may be an SSB. The CSI resource configuration (CSI-ResourceConfig) may be configured with an RS (SSB) only from the serving cell or an RS (SSB) only from the non-serving cell. The CSI resource configuration may be configured with a configuration of an NZP-CSI-RS resource.

In the present disclosure, CSI report configuration (CSI-ReportConfig), CSI resource configuration (CSI-ResourceConfig), and a CSI-SSB resource set (CSI-SSB-ResourceSet) may be interchangeably interpreted.

By using the separate CSI report configurations, it is possible to differentiate between an SSB of the serving cell and an SSB of the non-serving cell. For example, when a specific SSBC = 1 (#1) is configured, SSB #1 of the serving cell and SSB #1 of the non-serving cell are different from each other. The UE can differentiate between the SSB of the serving cell and the SSB of the non-serving cell in such a case.

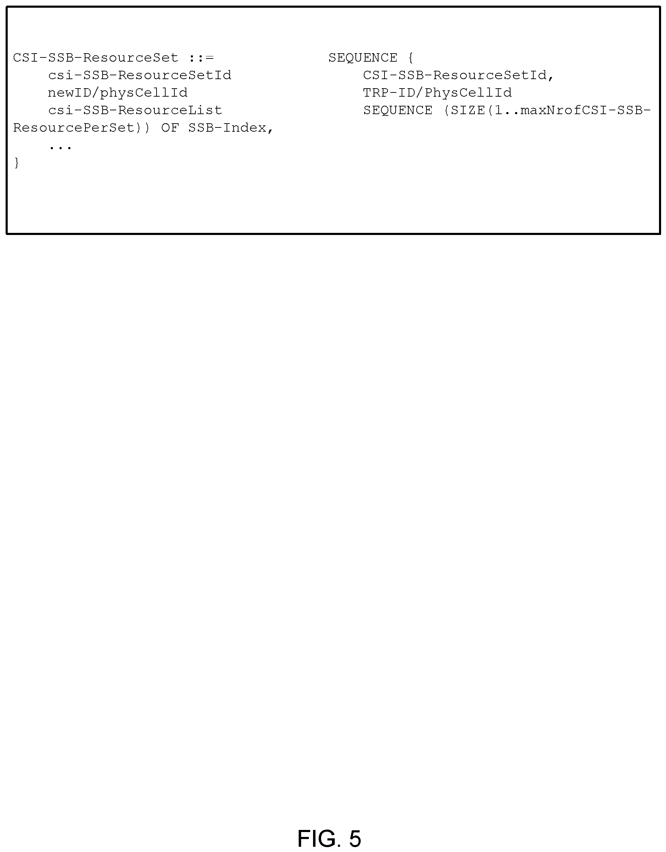

FIG. 5 is a diagram to show a first example of CSI-SSB-ResourceSet. As shown in FIG. 5, it may be indicated that "newID" (re-indexed index of the non-serving cell) or "physCellId" is configured as an RRC parameter in CSI-SSB-ResourceSet, and all the SSBs in CSI-SSB-ResourceSet are SSBs from the non-serving cell. "newID" may correspond to the ID of a TRP. A configuration related to measurement of an SSB of a different non-serving cell may be configured in different CSI-SSB-ResourceSet/CSI-ResourceConfig.

For example, when "newID" indicates the serving cell and one non-serving cell, 1 bit is used. For example, when "newID" indicates the serving cell, non-serving cell #1, non-serving cell #2, and non-serving cell #3, 2 bits are used. A larger number of bits may be used for "newID" according to the number of supported non-serving cells.

Advantages of the configuration of "newID" compared with "physCellId" (PCI) being directly configured will be described. When a PCI is directly configured in a QCL / TCI state, RRC overhead results in being high. The number of bits of one PCI in RRC signaling is 10 bits. When 64 TCI state configurations from the non-serving cell are present, 640 bits are used. Furthermore, when an SSB of the non-serving cell is configured in an L1 CSI report, 10 bits are used for each channel measurement resource (CMR) of the SSB of the non-serving cell. Hence, the total overhead is not low. In contrast, when "newID" is used and only one non-serving cell is involved, only 1 bit is used to indicate the non-serving cell. Thus, signaling overhead can be suppressed. A relationship between "newID" and "physCellId" may be defined in a configuration/specification.

### <Second Example>

The RS (for example, an SSB) of the serving cell and the RS (for example, an SSB) of the non-serving cell may be configured in the same CSI report configuration (CSI-ReportConfig) and the same CSI resource configuration (CSI-ResourceConfig). In other words, both the RS of the serving cell and the RS of the non-serving cell may be included in one CSI report configuration and one CSI resource configuration.

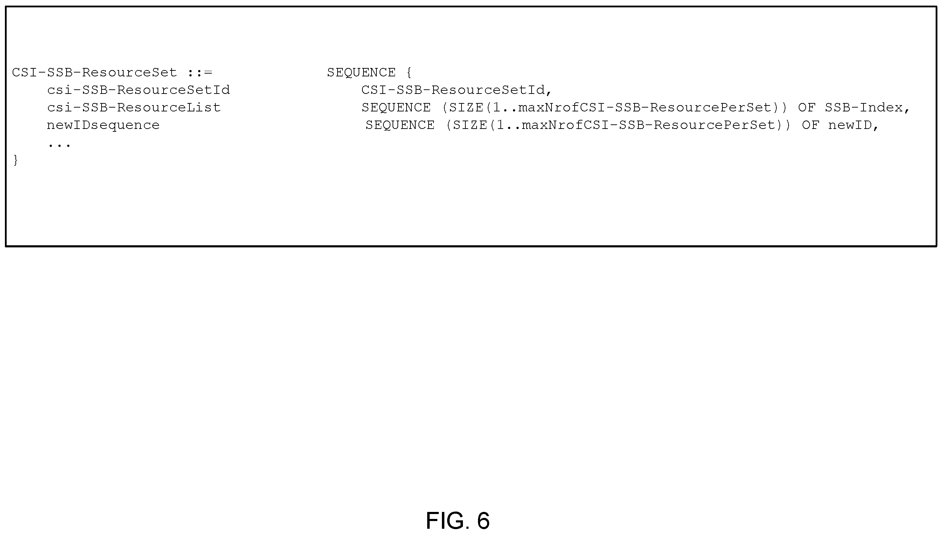

FIG. 6 is a diagram to show a second example of CSI-SSB-ResourceSet. As a higher layer (RRC) parameter received by the UE, csi-SSB-ResourceList in CSI-SSB-ResourceSet may include SSB-Index from the serving cell or SSB-Index from the non-serving cell.

For each SSB index, "new ID" (re-indexed index of the non-serving cell) or a PCI (PCI to be directly used) may be added. Alternatively, a sequence ("newIDsequence") as a bitmap indicating "new ID" may be added, and each bit (position of each bit in the sequence) may be mapped to an SSB (position of an SSB index in csi-SSB-ResourceList) in a one-to-one manner.

Alternatively, SSBs from different cells as different CMR groups may be added in a specific order. Alternatively, SSB-Index from the serving cell or SSB-Index from the non-serving cell may be configured in another format.

The first CMR group in csi-SSB-ResourceList means the serving cell, while the remaining CMRs may mean the non-serving cell(s). For example, X CMRs from the first CMR (first X CMRs) (or the first group (CMR group) with a new ID / PCI) may mean the serving cell, the next Y (second Y) CMRs (or the second group (CMR group) with a new ID / PCI) may mean non-serving cell #i, and the next Z (third Z) CMRs (or the third group (CMR group) with a new ID / PCI) may mean non-serving cell #j.

In FIG. 6, for example, when SSB indices = (1, 5, 8, 30) and a sequence as a bitmap indicating new IDs ("newIDsequence") = (0, 1, 0, 1) are configured, this may indicate SSB #1 of the serving cell, SSB #5 of the non-serving cell, SSB #8 of the serving cell, and SSB #30 of the non-serving cell. In other words, new ID = 0 may indicate the serving cell, while new ID = 1 may indicate the non-serving cell.

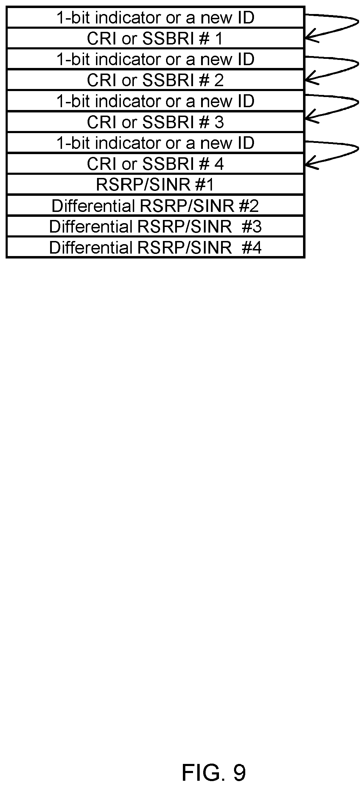

A plurality of combinations of one csi-SSB-Resource (one SSB index in csi-SSB-ResourceList) and one new ID / PCI (one new ID / PCI in newIDsequence) may be configured. For example, instead of csi-SSB-ResourceList (1, 5, 8, 30) and newIDsequence (0, 1, 0, 1) in the example in FIG. 9, a list (sequence) of combinations of (1, 0), (5, 1), (8, 0), and (30, 1) may be configured.

In RRC signaling, since SSBs from cells are included in CSI-SSB-ResourceSet (for example, as in the first example), SSBs of a plurality of cells may be configured in a plurality of CSI-SSB-ResourceSet and may be included in CSI-ReportConfig (even in a case of periodic(P) CSI reporting / Semi-Persistent (SP) CSI reporting).

For future radio communication systems (for example, NR), L1/L2 inter-cell mobility that facilitates more efficient DL/UL beam management (that achieves lower latency and overhead) is studied.

In L1/L2 inter-cell mobility, serving cell change is possible by using a function such as beam control without RRC reconfiguration. In other words, transmission/reception to/from a non-serving cell is possible without handover. Since a data incommunicable period occurs due to the necessity of RRC reconnection and the like for handover, L1/L2 inter-cell mobility with no necessity of handover is preferable.

However, it has not been sufficiently studied about CSI reporting for a reference signal of a non-serving cell in previous NR specifications. Accordingly, appropriate CSI reporting for the non-serving cell may fail to be performed. Thus, the inventors of the present invention came up with the idea of a terminal capable of performing appropriate CSI reporting for a non-serving cell.

Embodiments according to the present disclosure will be described in detail with reference to the drawings as follows. The radio communication methods according to respective embodiments may each be employed individually, or may be employed in combination.

In the present disclosure, CSI reporting and beam reporting may be interchangeably interpreted. Reporting and measurement may be interchangeably interpreted.

Note that in the present disclosure, a panel, an Uplink (UL) transmission entity, a TRP, a TRP-ID, a TRP ID, a spatial relation, a control resource set (COntrol REsource SET (CORESET)), a PDSCH, a codeword, a base station, a certain antenna port (for example, a demodulation reference signal (DMRS) port), a certain antenna port group (for example, a DMRS port group), a certain group (for example, a code division multiplexing (CDM) group, a certain reference signal group, or a CORESET group), and a CORESET pool may be interchangeably interpreted. A panel Identifier (ID) and a panel may be interchangeably interpreted.

In the present disclosure, a cell, a CC, a carrier, a BWP, and a band may be interchangeably interpreted.

In the present disclosure, an index, an ID, an indicator, and a resource ID may be interchangeably interpreted.

Embodiments according to the present disclosure will be described in detail with reference to the drawings as follows. The radio communication methods according to respective embodiments may each be employed individually, or may be employed in combination. Note that in the present disclosure, "A/B" may be interpreted as "at least one of A and B."

In the present disclosure, a CSI report configuration (CSI-ReportConfig) and a CSI report setting may be interchangeably interpreted. A CSI resource configuration (CSI-ResourceConfig) and a CSI resource setting may be interchangeably interpreted.

In the present disclosure, an RS, a beam, a measurement result, and a configuration of an RS may be interchangeably interpreted. An RS may mean at least one of a CRI and an SSBRI in a CSI report. An L1-RSRP and an L1-SINR may be interchangeably interpreted. An SSB, an SSB index, and an SSBRI may be interchangeably interpreted. A group, a CMR group, a DMRS group, and a beam pair may be interchangeably interpreted.

### (Radio Communication Method)

### <Problem 1>

For example, it is not clear how to distinguish whether a beam index (SSB index) included in a CSI report is for serving cell or for non-serving cell when a configuration of an RS (for example, an SSB) of a serving cell and a configuration of an RS (for example, an SSB) of a non-serving cell are configured in the same CSI report configuration / CSI resource configuration, or when separate CSI report configurations are configured for the RS of the serving cell and the RS of the non-serving cell.

### <First Embodiment>

When the UE receives the same (one) CSI report configuration / CSI resource configuration including both the configuration of the RS (for example, an SSB) of the serving cell and the configuration of the RS (for example, an SSB) of the non-serving cell, the UE may control transmission (reporting) of a CSI report including information (for example, an indicator) indicating the serving cell / non-serving cell in addition to known report contents. The information is information indicating association between a reference signal / measurement result and the serving cell or the non-serving cell and is, for example, an indicator described in Aspect 1-1 or 1-2, an extended beam index described in Aspect 1-3, or the like. The report contents may be at least one of an SSB index, a CRI, an L1-RSRP, an L1-SINR, an L1-SNR, an LI, an RI, a PMI, and a CQI, for example. As a method of configuring this information, an example described in each of the aspects below may be applied.

### {Aspect 1-1}

A 1-bit indicator indicating the serving cell / non-serving cell may be applied. For example, "0" may indicate the serving cell while "1" may indicate the non-serving cell. Alternatively, "1" may indicate the serving cell while "0" may indicate the non-serving cell.

### {Aspect 1-2}

As information indicating the serving cell / non-serving cell, a new ID (for example, a re-indexed (re-numbered) index indicating the non-serving cell, a group ID of CMR) or a PCI (PCI to be used directly) may be applied. This new ID may depend on RS configuration signaling (CSI report configuration / CSI resource configuration). This new ID may be such that "0" indicates the serving cell, "1" indicates non-serving cell #1, and "2" indicates non-serving cell #2, for example. In other words, this new ID may indicate any of the serving cell and the one or more non-serving cells.

The re-indexed index indicating the non-serving cell may be associated with part of the PCI. By using the re-indexed index instead of the PCI, the number of information bits is reduced, which can reduce the overhead of RRC signaling. The re-indexed index may be referred to as a re-index index.

In Aspect 1-1 and Aspect 1-2, the UE may additionally report each beam index (of both a serving cell RS and a non-serving cell RS). Alternatively, the UE may additionally report only the RS corresponding to the non-serving cell.

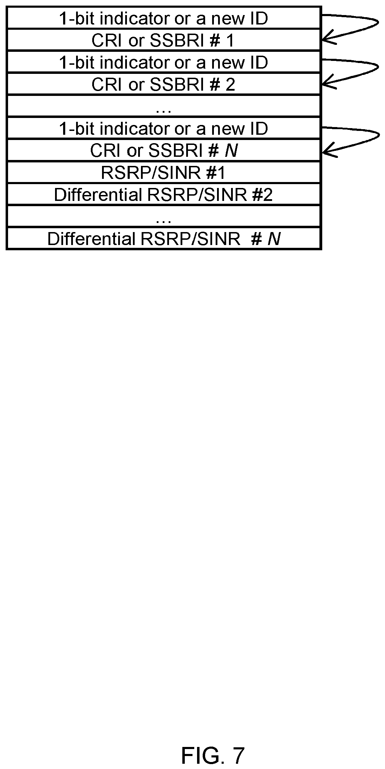

FIG. 7 is a diagram to show an example of a CSI report in a case where Aspect 1-1 and Aspect 1-2 are applied. In FIG. 7, when Aspect 1-1 is applied, "1-bit indicator" indicating the serving cell / non-serving cell is used, and when Aspect 1-2 is applied, "new ID" indicating the serving cell / non-serving cell is used. As shown in FIG. 7, "1-bit indicator" or "new ID" corresponds to "CRI or SSBRI #X" (X = 1 to N).

### {Aspect 1-3}

As information indicating the serving cell / non-serving cell, an extended beam index by the re-indexed index of the non-serving cell RS (RS index, SSB index, CSI-RS resource index, beam index for reporting, RS index for reporting) may be applied. In this case, additional report contents need not be required. In the present disclosure, an SSB index and an SSBRI may be interchangeably interpreted.

As the extended beam index, non-serving cell RSs may be first re-numbered (re-indexed) according to (the order of) non-serving cell PCIs / indices / group IDs, and the non-serving cell RS indices may be re-numbered according to (the order of) RS indices (SSB indices, CSI-RS resource indices). For example, SSB indices 0 to 63 may be re-numbered to SSB #0 to #63 for the serving cell and to SSB #64 to #127 for the non-serving cell (to be used for reporting) as extended beam indices.

For example, when two non-serving cell RSs are configured, SSBs #0, #4, and #5 are transmitted from non-serving cell #1 and SSBs #2, #4, #10, and #12 are transmitted from non-serving cell #2. Then, reported SSB indices #64, #65, and #66 may indicate SSBs #0, #4, and #5 corresponding to non-serving cell #1, and reported SSB indices #67, #68, #69, and #70 may indicate SSBs #2, #4, #10, and #12 corresponding to non-serving cell #2.

The re-index indices of non-serving cell SSBs may start from the largest number of serving cell SSBs (for example, 4, 8, 64). The re-index indices of the non-serving cell SSBs may start to follow the largest value of serving cell SSB indices (for example, when SSBs #0, #1, #5, #8, and #10 corresponding to the serving cell are configured, reported non-serving cell SSB indices start from 11).

The re-index indices of the non-serving cell SSBs may start to follow the largest value of re-indexed indices of the serving cell SSB (for example, when SSBs #0, #1, #5, #8, and #10 of the serving cell are configured, SSB indices #0, #1, #2, #3, and #4 of the serving cell are re-indexed and reported, and hence reported non-serving cell SSB indices start from 5).

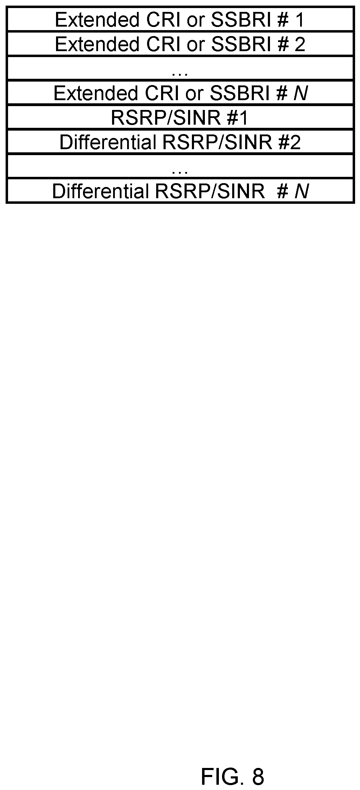

FIG. 8 is a diagram to show an example of a CSI report in a case where Aspect 1-3 is applied. In FIG. 8, a CRI or an SSBRI "Extended CRI or SSB RI #X" (X = 1 to N) extended (with an increased number of bits) to support non-serving cell beam reporting is used. As reporting of an RSRP/SINR, "RSRP/SINR #1" and "Differential RSRP/SINR #X" (X = 2 to N) are included.

Each of the above aspects may be applied only to SSB index reporting (not applied to CRI reporting) or may be applied both SSB index reporting and CRI reporting.

In a current specification of L1-RSRP reporting (Rel. 15/16), the value of an L1-RSRP is defined by a 7-bit value in the range of [-140, -44] dBm (with a step size of 1 dB). When a differential L1-RSRP is used, the highest measurement value of the L1-RSRP is quantized to a 7-bit value in the range of [-140, -44] dBm (with a step size of 1 dB), and a four-bit value is quantized as the differential L1-RSRP. The differential L1-RSRP is the difference between a measurement value of the L1-RSRP and the highest value (strongest RSRP) of the L1-RSRP.

Note that it is also conceivable that the specification is changed as in (1-1) and (1-2) below as future specifications of L1-RSRP reporting.

(1-1) When non-serving cell beam reporting is configured for the UE in addition to serving cell beam reporting, the bit size of each beam report may maintain the number of bits (7 bits / 4 bits) in the current specification and the number of bits obtained by multiplying the number of bits of the current specification above by X may be used as the total number of bits. X may vary according to the number of non-serving cells supported (reported to support) by the UE or the number of non-serving cells configured for the UE.

(1-2) The numbers of bits in the specification above (L1-RSRP of 7 bits, differential L1-RSRP of 4 bits) may be maintained. To support non-serving cell beam reporting, best (strongest) L1-RSRPs in both the serving cell and the non-serving cell may be reported by using 7 bits, and the differential L1-RSRP of each beam in both the serving cell and the non-serving cell may be reported by using 4 bits. Although this can suppress overhead, a quantization error due to the support of non-serving cell beam reporting may increase.

In the current specification, the number of bits of beam reporting is defined to support 64 SSBs at maximum. Hence, it is conceivable that a specification of CRI/SSBRI is updated when the number of SSBs is extended to support SSB indices of 0 to 127. For example, to support non-serving cell beam reporting, the number of bits for beam/resource indices (CRIs/SSBRIs) may be increased. In this case, Examples (2-1) and (2-2) below are conceivable as future specifications of L1-RSRP reporting.

(2-1) The numbers of bits in the specification above (L1-RSRP of 7 bits, differential L1-RSRP of 4 bits) may be maintained. In other words, this means that the total number of bits of beam reporting is increased to support non-serving cell beam reporting.

(2-2) When the UE is configured with non-serving cell beam reporting, the numbers of bits for L1-RSRP values may be reduced. Specifically, bits smaller than 7 bits may be used for L1-RSRP, and bits smaller than 4 bits may be used for differential L1-RSRP. In this case, the total number of bits for beam reporting is smaller than that in 2-1 above, which can suppress overhead. However, a quantization error may increase. The numbers of bits to be used may be defined in a specification or may be configured for the UE by higher layer signaling or the like.

In a case where (1-1) or (2-2) is applied, a table defining report values of L1-RSRPs and differential L1-RSRP values in a specification may be updated.

### {Rules of Beam Selection/Ordering of CSI Reporting}

Option 1 or Option 2 below may be applied to rules of beam selection/ordering of CSI reporting.

### {{Option 1}}

As in Rel. 15/16, beam selection/ordering may be performed according to the strengths of L1-RSRPs/L1-SINRs. FIG. 9 is a diagram to show an example of a CSI report ordered according to the strengths of L1-RSRPs/L1-SINRs. In Option 1, as in the example in FIG. 7, "1-bit indicator" or "new ID" corresponds to "CRI or SSBRI #X." However, this example is different from the example in FIG. 7 in that (X = 1 to 4). With respect to reporting of an RSRP/SINR, this example also includes "RSRP/SINR #1" and "Differential RSRP/SINR #X" but is different from the example in FIG. 7 in that (X = 2 to 4). Note that X may be larger than 4.

### {{Option 2}}

In the beam selection/ordering, not only the strengths of L1-RSRPs/L1-SINRs but also whether to correspond to the serving cell / non-serving cell may be taken into consideration. For example, to report a selected satisfactory beam, the UE may first map a report for an RS of the serving cell and subsequently map a report for an RS of the non-serving cell, in a CSI report.

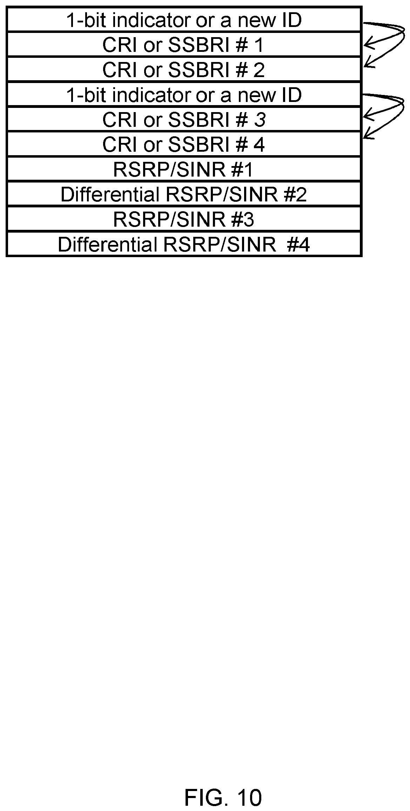

FIG. 10 is a diagram to show an example of a CSI report taking into account of the serving cell / non-serving cell for ordering. In FIG. 10, "CRI or SSBRI #1" and "CRI or SSBRI #2" correspond to the serving cell (first 1-bit indicator or new ID"), and "CRI or SSBRI #3" and "CRI or SSBRI #4" correspond to the non-serving cell (second 1-bit indicator or new ID"). In FIG. 10, for example, RSRP/SINR #1 and Differential RSRP/SINR #2 correspond to the serving cell, and RSRP/SINR #3 and Differential RSRP/SINR #4 correspond to the non-serving cell. For example, each of RSRP/SINR #1 and RSRP/SINR #3 is the largest value and hence uses 7 bits, and each of Differential RSRP/SINR #2 and Differential RSRP/SINR #4 is a differential value from the largest value and hence uses 4 bits.

Option 2 may be used when separate (different) beam numbers are configured for reporting of the serving cell / non-serving cell. For an RS from the serving cell, a 1-bit indicator or a new ID may be omitted. When only one non-serving cell is present, a 1-bit indicator or a new ID of an RS from the non-serving cell may be omitted (corresponding to Aspect 1-4 to be described below).

When a plurality of non-serving cells are involved, the UE may order RSs of the non-serving cells according to at least one of PCIs, re-indexed indices of the non-serving cells, and CMR group IDs.

As described above, in Option 1, a 1-bit indicator or a new ID is needed for each reported beam. In Option 2, for one or a plurality of RSs corresponding to the serving cell (or the non-serving cell(s)), the number of necessary 1-bit indicators or new IDs is only one.

In Option 2, for each of the RSs of the serving cell and the non-serving cell reported first, an RSRP/SINR value (7 bits) is reported. Subsequently, for each remaining reported RS of the serving cell and the non-serving cell reported, a differential RSRP/SINR value is reported. In this case, the range of 4-bit differential RSRP/SINR value may be invariable among a plurality of cells (fields) or may be changed for each cell (field).

In Option 2, a report of RSRPs/SINRs may be divided into two parts (RS and RSRP/SINR value of the serving cell and RS and RSRP/SINR value of the non-serving cell). In other words, when UCI payload has a size that cannot be transmitted (UCI payload size is larger than the size that can be transmitted by the UE or the coding rate of the UCI is larger than the maximum coding rate) and a new RRC parameter is used for indication, the second CSI part including the RS and the RSRP/SINR value of the non-serving cell may be omitted/deleted.

### {Aspect 1-4}

The number of beams to be reported for the serving cell / non-serving cell may be defined in a specification or may be configured by RRC / MAC CE / DCI or the like in advance. In CSI reporting, the order of beams may mean (imply) indication of the serving/non-serving cell. In other words, the UE may determine mapping of a report corresponding to the serving cell / non-serving cell in the CSI reporting, based on the number of beams reported for the serving cell / non-serving cell.

For example, when it is configured so that two beams are reported for each of the serving cell and the non-serving cell, reporting of the first two beams (CRIs or CCBRIs) in CSI reporting is reporting corresponding to the serving cell, and reporting of the last two beams (CRIs or CCBRIs) in the CSI reporting is reporting corresponding to the non-serving cell.

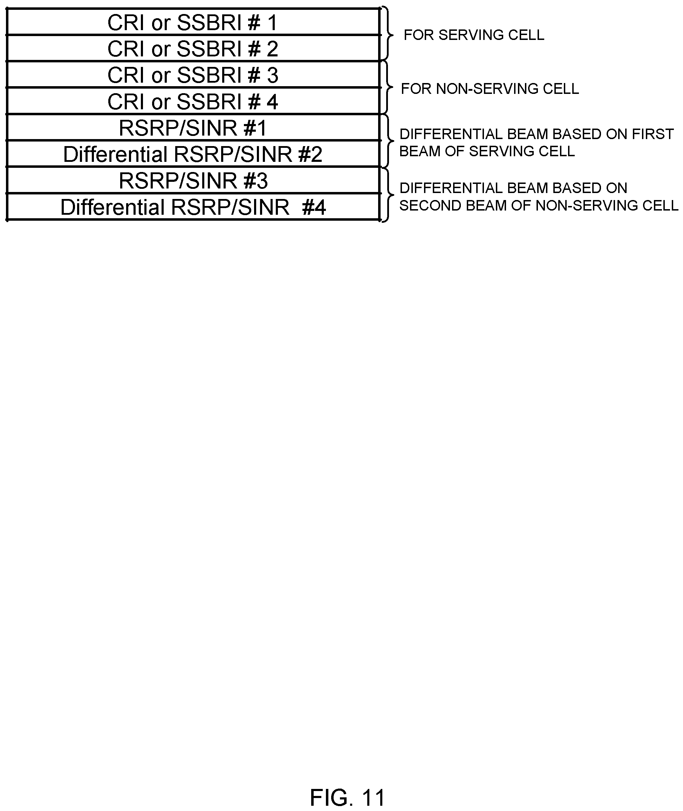

FIG. 11 shows an example of a CSI report of Aspect 1-4. In the example shown in FIG. 11, "CRI or SSBRI #1" and "CRI or SSBRI #2" always correspond to the serving cell, and "CRI or SSBRI #3" and "CRI or SSBRI #4" always correspond to the non-serving cell. According to the example in FIG. 11, a new indicator is not needed, which can suppress overhead.

FIG. 11 is similar to FIG. 10 except that a 1-bit indicator or a new ID is omitted. In other words, an L1-RSRP/SINR value of the first beam of the non-serving cell (RSRP/SINR #3) is the largest value and is hence quantized to 7 bits. A differential L1-RSRP/SINR value of another beam of the non-serving cell (Differential RSRP/SINR #4) is quantized to 4 bits as a differential value with respect to the first beam of the non-serving cell.

According to this embodiment, it is possible to easily differentiate whether an RS in CSI reporting is for the serving cell or for the non-serving cell. When a plurality of non-serving cells are present, it is possible to easily differentiate for which non-serving cell an RS in CSI reporting is.

### <Second Embodiment>

CSI reporting when separate CSI report configurations are configured for an RS of the serving cell and an RS of the non-serving cell will be described.

When a CSI report configuration (RS included in a CSI report configuration) corresponds to only one non-serving cell, known report contents (of Rel. 15/16) may be applied directly. When a CSI report configuration (RS included in a CSI report configuration) corresponds to a plurality of non-serving cells, the method of the first embodiment may be applied to indicate from which non-serving cell a reported beam index is from.

According to this embodiment, even when separate CSI report configurations are configured for an RS of the serving cell and an RS of the non-serving cell, similar effects to those of the first embodiment can be obtained.

### <Third Embodiment>

An example of a case where group-based beam reporting (CSI reporting) is applied and RSs (for example, SSBs) of the serving cell and the non-serving cell are included in the same (one) CSI report configuration / CSI resource configuration including different CMR groups will be described. In Aspects 3-1 and 3-2, an example of a case where two beams from different CMR groups are reported in one group (one beam pair) will be described.

### {Aspect 3-1}

The UE may individually report, for two beams reported in each group, cells of the respective beams, in a method similar to that of the first embodiment. For example, when one CSI report configuration / CSI resource configuration includes different CMR groups, the CSI report may include information indicating the serving cell or the non-serving cell in a report of each of the CMR groups. The information is information indicating association between a reference signal / measurement result and the serving cell or the non-serving cell and may be, for example, applied with similar information to an indicator described in Aspect 1-1 or 1-2, an extended beam index described in Aspect 1-3, or the like. When a plurality of CMR groups (beam pairs) are included in a CSI report, Options 1 to 3 below are applied, for example.

### {{Option 1}}

An RSRP/SINR value is quantized to 7 bits and reported for the first beam with the strongest (highest) RSRP/SINR in each beam pair. A differential value based on the RSRP/SINR value of the first beam in each beam pair is quantized to 4 bits and reported for the second beam of each pair.

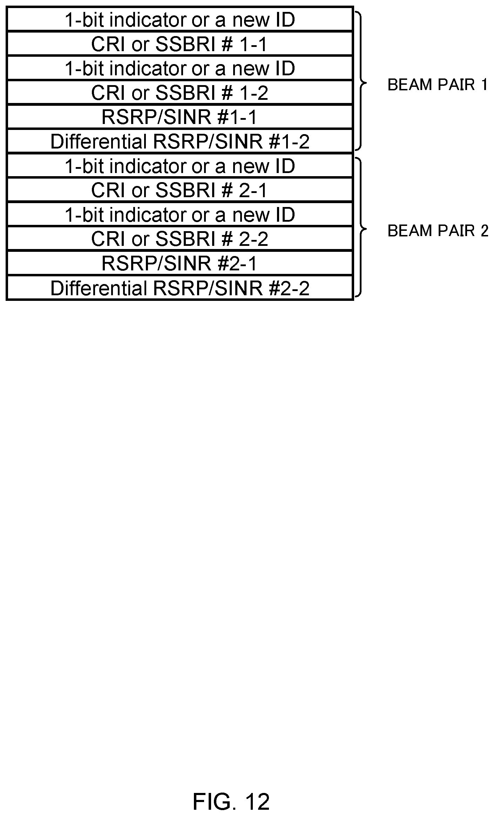

FIG. 12 is a diagram to show an example of a CSI report in Option 1 of Aspect 3-1. For example, in beam pair 1, the first "1-bit indicator or a new ID" corresponds to "CRI or SSBRI #1-1," and the second "1-bit indicator or a new ID" corresponds to "CRI or SSBRI #1-2." "RSRP/SINR #1-1" is an RSRP/SINR value of the first beam with the strongest (highest) RSRP/SINR. "Differential RSRP/SINR #1-2" is a differential value based on the value of the first beam. This similarly applies to beam pair 2.

### {{Option 2}}

An RSRP/SINR value is quantized to 7 bits and reported for the first beam of the first beam pair with the strongest (highest) RSRP/SINR. A differential value based on the strongest RSRP/SINR value for the second beam of the first beam pair and each beam of another beam pair is quantized to 4 bits and reported.

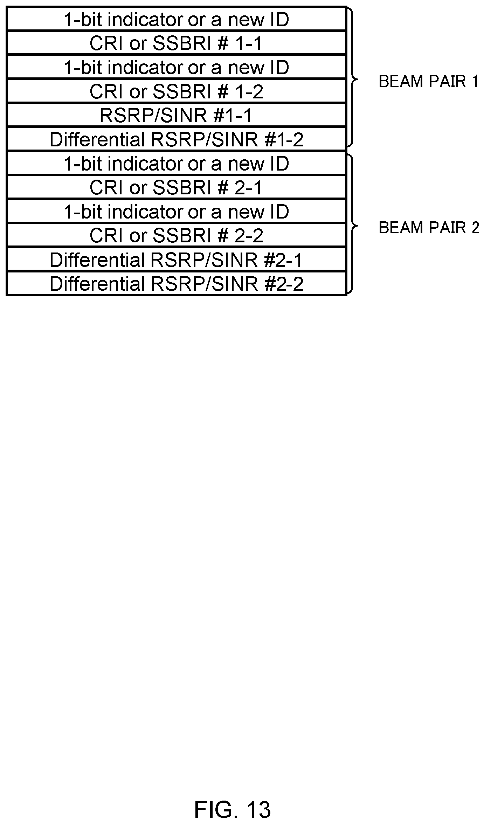

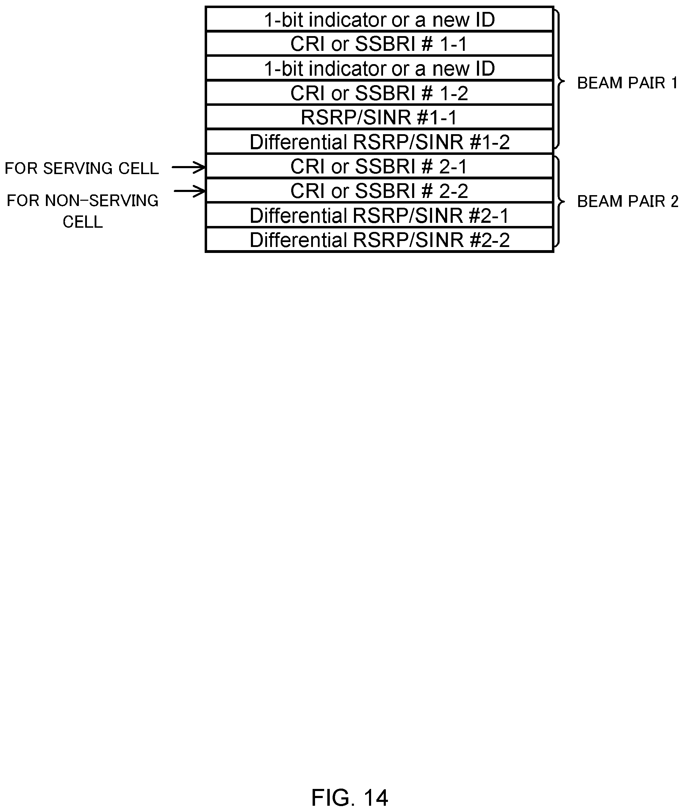

For the two beams of the first beam pair, new report contents (1-bit indicator or new ID) described in the first embodiment may be applied. For the second and subsequent beam pairs similarly to the first beam pair, new report contents (1-bit indicator or new ID) may be applied (for example, refer to FIG. 13), or the new report contents may be omitted (for example, refer to FIG. 14).

FIG. 13 is a diagram to show a first example of a CSI report in Option 2 of Aspect 3-1. In the example in FIG. 13, new report contents (1-bit indicator or new ID) are applied to the second and subsequent beam pairs similarly to the first beam pair. FIG. 13 is different from FIG. 12 in that "Differential RSRP/SINR #2-1" is included in the report of beam pair 2 instead of "RSRP/SINR #2-1." "Differential RSRP/SINR #2-1" is a differential value from "RSRP/SINR #1-1," which is the strongest RSRP/SINR value. Description is omitted for similar respects to those of FIG. 12.

FIG. 14 is a diagram to show a second example of a CSI report in Option 2 of Aspect 3-1. FIG. 14 is different from FIG. 13 in that new report contents "1-bit indicator or a new ID" is omitted for beam pair 2. In the example in FIG. 14, an RS of the serving cell first and subsequently an RS of the non-serving cell are mapped in this order in the beam pair 2. Note that, also for beam pair 1, new report contents may be omitted similarly to beam pair 2.

According to Option 2, the number of bits can be reduced by using a differential value for reporting of an RSRP/SINR for the beams of another beam pair.

### {{Option 3}}

A new RRC parameter indicating the average RSRP/SINR value of each beam pair may be configured. In CSI reporting, an RS of the serving cell first and subsequently an RS of the non-serving cell are mapped for each beam pair. The strongest average RSRP/SINR value is quantized to 7 bits and reported. A differential value between the strongest average RSRP/SINR value (average RSRP/SINR value of the first beam pair) and the average RSRP/SINR value of another beam pair is quantized to 4 bits and reported.

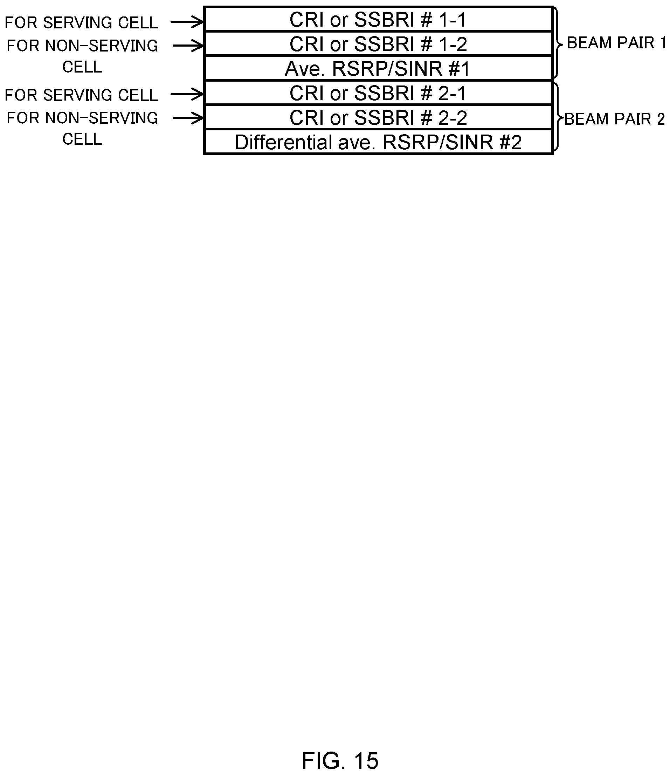

FIG. 15 is a diagram to show an example of a CSI report in Option 3 of Aspect 3-1. In the example in FIG. 15, the strongest average RSRP/SINR value (average value of beam pair 1) is "Ave. RSRP/SINR #1," and the differential value between the strongest average RSRP/SINR value and the average RSRP/SINR value of another beam pair (beam pair 2) is "Differential ave. RSRP/SINR #2." For each beam pair, an RS of the serving cell (CRI or SSBRI) first and subsequently an RS of the non-serving cell are mapped in this order.

According to Option 3, report contents can be reduced. Irrespective of the numbers of beams of beam pairs, the numbers of report contents of RSRPs/SINRs can be the same.

### { {Variations} }

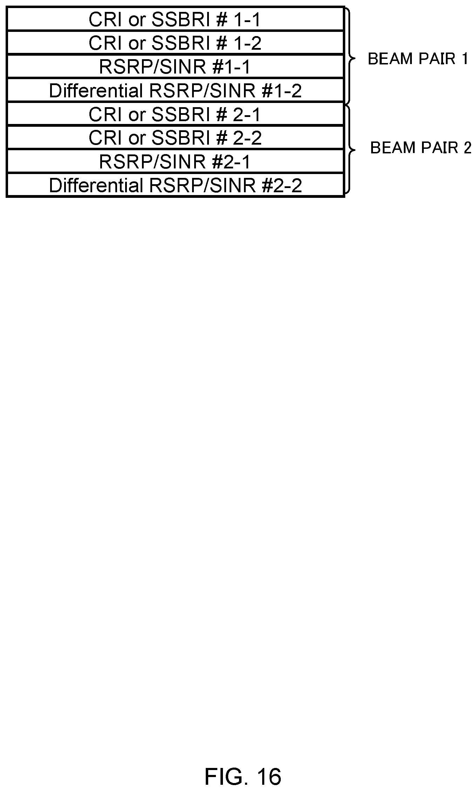

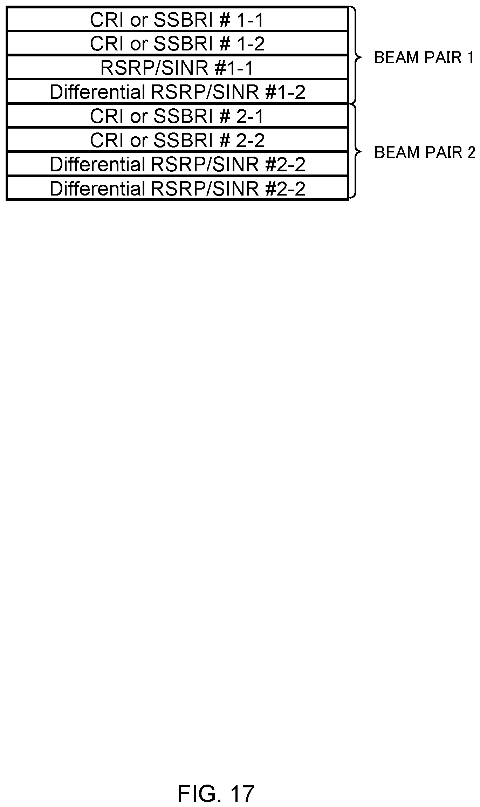

The beam ordering and the quantization rules described in Options 1 to 3 may be applied to general group-based CSI reporting (for example, a case where an RS of the non-serving cell is not configured) of a case where a plurality of groups / beam pairs are included in a CSI report. Examples of this CSI report are shown in FIGS. 16 and 17.

FIG. 16 is a diagram to show a variation of a CSI report in Option 1 of Aspect 3-1. FIG. 16 is similar to the example shown in FIG. 12 except that "1-bit indicator or a new ID" is not included. FIG. 17 is a diagram to show a variation of a CSI report in Option 2 of Aspect 3-1. FIG. 17 is similar to the examples shown in FIGS. 13 and 14 except that "1-bit indicator or a new ID" is not included. Note that, for the example of Option 3 (FIG. 15), a similar CSI report configuration is used even for a general group-based beam reporting (for example, a case where a non-serving cell RS is not configured).

### {Aspect 3-2}

The order of beams in each group may imply the serving/non-serving cell. In this case, new report contents are not added to Rel. 15 and Rel. 16. For example, when one CSI report configuration includes different CMR groups, an RS of the serving cell is mapped first, and subsequently an RS of the non-serving cell is mapped, in a report of each of the CMR groups (beam pairs) in the CSI report. In this case, the UE may report a 7-bit RSRP/SINR value (largest value) for each beam.

### {Aspect 3-3}

An example of a case where beams from different CMR groups are reported in different groups will be described.

When only an RS of one cell is included in the same CMR group, a group index may indicate a cell index. For example, the UE may explicitly report the group index corresponding to the cell index. Alternatively, the order of mapped groups may mean group indices.

When RSs of a plurality of non-serving cells are included in the same CMR group, the example of each of the aspects of the first embodiment may be applied. By applying the examples of the first embodiment, non-serving cell indices of the respective beams are differentiated.

According to this embodiment, even when group-based CSI reporting is applied, similar effects to those of the first embodiment can be obtained. In addition, CSI reporting when a CSI report includes different CMR groups can be appropriately performed.

### <UE Capability>

The UE may transmit (report) at least one of the UE capabilities (UE capability information) in (1) to (9) below for the first to third embodiments. Note that the UE may transmit UE capability indicating whether to support at least one of the examples in the first to third embodiments, without limiting to the following examples.

(1) Whether to support new report contents when an RS (for example, an SSB) of the non-serving cell is configured in a CSI report configuration (RS of the serving cell may also be configured but need not be configured). New report contents may be, for example, a 1-bit indicator or a new ID described in the first embodiment (for example, a re-indexed index (re-indexing) indicating the non-serving cell, a CMR group ID, or a PCI (PCI to be used directly)).
(2) Whether to support the new report contents in (1) being used for group-based beam reporting (CSI reporting).
(3) Whether to support reporting of an extended beam index described in Aspect 1-3 of the first embodiment when an RS (for example, an SSB) of the non-serving cell is configured in a CSI report configuration (RS of the serving cell may also be configured but need not be configured).
(4) Whether to support reporting of the extended beam index in (3) being used for group-based beam reporting (CSI reporting).
(5) Whether to support omission/drop of an L1 beam index (CRI or SSBRI) and an L1-RSRP/SINR value from the non-serving cell.
(6) Whether to support a configuration of a non-serving cell RS (RS of the serving cell may also be configured but need not be configured) in a CSI report configuration for group-based beam reporting.
(7) Whether to support differential RSRP/SINR reporting of the second beam of each beam pair in group-based beam reporting.
(8) Whether to support reporting of differential RSRP/SINR values of another beam pair based on the RSRP/SINR value of the first beam pair in group-based beam reporting.
(9) Whether to support reporting of an average RSRP/SINR value of each beam pair in group-based beam reporting.

### <Problem 2>

To determine beam selection and inter-cell mobility, the base station (gNB) preferably acquires both an L3-RSRP and an L1-RSRP. For example, when the result of the L3-RSRP is preferable, the base station can determine change of the serving cell. When the L1-RSRP is preferable while the L3-RSRP is not preferable, the base station may carry out temporary change of beam scheduling but need not change the serving cell. However, it is not clear how to perform reporting of an L3-RSRP and an L1-RSRP when an RS of the non-serving cell is included in a CSI report configuration / CSI resource configuration.

### <Fourth Embodiment>

When a configuration of an RS (for example, an SSB) of the serving cell and a configuration of an RS (for example, an SSB) of the non-serving cell are included in separate CSI report configurations / CSI resource configurations, and a new RRC parameter is configured in a CSI report configuration / CSI resource configuration to be used for beam reporting, the UE may control transmission of a CSI report including an L3-RSRP (Layer 3 Reference Signal Received Power) value in addition to an SSB index (SSBRI)/CRI and an L1-RSRP value / L1-SINR value, based on the CSI report configuration / CSI resource configuration. For example, the CSI report may include an L3-RSRP for each cell or for each beam. Concretely, for reporting of the L3-RSRP value in the CSI report, any of Options 1 to 3 below may be applied.

### {Option 1}

The CSI report may include an L3-RSRP value for each beam to report. In this case, an X-bit L3-RSRP value is quantized for each beam.

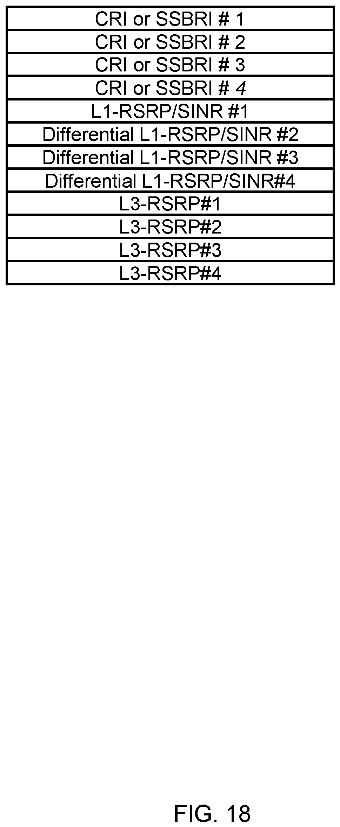

FIG. 18 is a diagram to show an example of a CSI report in Option 1 of a fourth embodiment. As shown in FIG. 18, L3-RSRP values (L3-RSRP #1 to L3-RSRP #4) for the respective beams corresponding to four beam reports may be included in the CSI report.

### {Option 2}

One L3-RSRP value corresponding to a specific cell(s)
(reported/configured/selected cell) may be included in the CSI report. Both the serving cell and the non-serving cell may be applicable, or only the non-serving cell may be applicable, as a specific cell(s). Beams with a filtered cell-level L3-RSRP value may follow a Radio Resource Management (RRM) measurement configuration or may follow a new RRC configuration.

### {Option 3}

One L3-RSRP value corresponding to one or more beams (reported/configured/selected beams) for a specific cell (reported/configured/selected cell) may be included in the CSI report. Both the serving cell and the non-serving cell may be applicable, or only the non-serving cell may be applicable, as a specific cell(s).

The UE may assume that a reported/configured/selected beam of each cell is included in a filtered beam with a multi-beam level L3-RSRP. Alternatively, the filtered beam with a multi-beam level L3-RSRP may be configured by RRC / MAC CE.

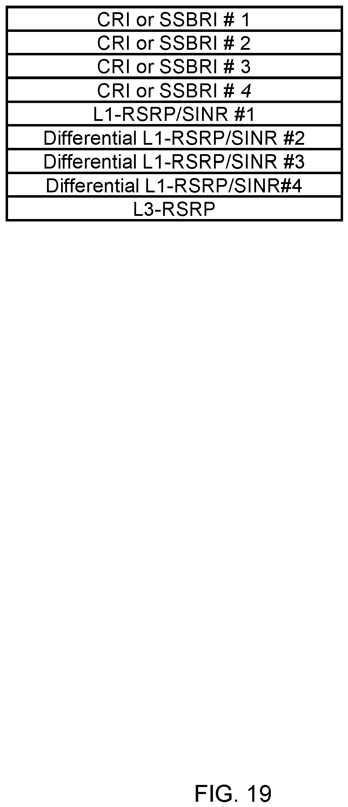

FIG. 19 is a diagram to show an example of a CSI report in Option 2 and Option 3 of the fourth embodiment. The L3-RSRP value included in the CSI report in FIG. 19 may be an L3-RSRP value corresponding to a specific cell (Option 2). The L3-RSRP value included in the CSI report in FIG. 19 may be an L3-RSRP value corresponding to a specific beam for a specific cell (Option 3).

The CSI report may be divided into two CSI parts (first CSI part including an L1-RSRP/SINR and a second CSI part including an L3-RSRP). When UCI payload has a size that cannot be transmitted (UCI payload size is larger than the size that can be transmitted by the UE or the coding rate of the UCI is larger than the maximum coding rate) and a new RRC parameter is used for indication, the second CSI part including the L3-RSRP may be omitted/dropped.

According to this embodiment, when an RS of the serving cell and an RS of the non-serving cell are included in separate CSI report configurations / CSI resource configurations, CSI reporting including an L3-RSRP in addition to an SSB index (SSBRI)/CRI and an L1-RSRP value / L1-SINR value can be appropriately controlled.

### <Fifth Embodiment>

When both a configuration of an RS of the serving cell and a configuration of an RS (for example, an SSB) of the non-serving cell are included in the same (one) CSI report configuration / CSI resource configuration, the UE may control transmission of a CSI report including an L3-RSRP value in addition to an SSB index (SSBRI)/CRI and an L1-RSRP value / L1-SINR value, based on the CSI report configuration / CSI resource configuration. For reporting of the L3-RSRP value, any of Options 1 to 3 below may be applied.

### {Option 1}

The CSI report may include an L3-RSRP value for each beam to report. In this case, an X-bit L3-RSRP value is quantized for each beam.

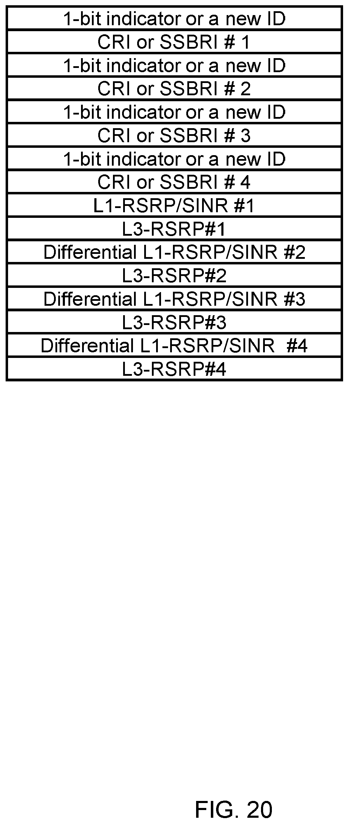

FIG. 20 is a diagram to show an example of a CSI report in Option 1 of a fifth embodiment. The CSI report in FIG. 20 includes information indicating the serving cell / non-serving cell (1-bit indicator or new ID) described in the first embodiment. L3-RSRP values (L3-RSRP #1 to L3-RSRP #4) are mapped after respective L1-RSRP/SINR values. In other words, an L1-RSRP/SINR value and an L3-RSRP value are mapped for each beam.

### {Option 2}

One L3-RSRP value corresponding to each cell
(reported/configured/selected cell) may be included in the CSI report. Each of both the serving cell and the non-serving cell may be applicable, or only the non-serving cell may be applicable, as the each cell. Filtered beams with a cell-level L3-RSRP value may follow an RRM measurement configuration or may follow a new RRC configuration.

### {Option 3}

One L3-RSRP value corresponding to one or more beams (reported/configured/selected beams) for each cell (reported/configured/selected cell) may be included in the CSI report. Each of both the serving cell and the non-serving cell may be applicable, or only the non-serving cell may be applicable, as the each cell.

The UE may assume that a reported/configured/selected beam of each cell is included in a filtered beam with a multi-beam level L3-RSRP. Alternatively, the filtered beam with a multi-beam level L3-RSRP may be configured by RRC / MAC CE.

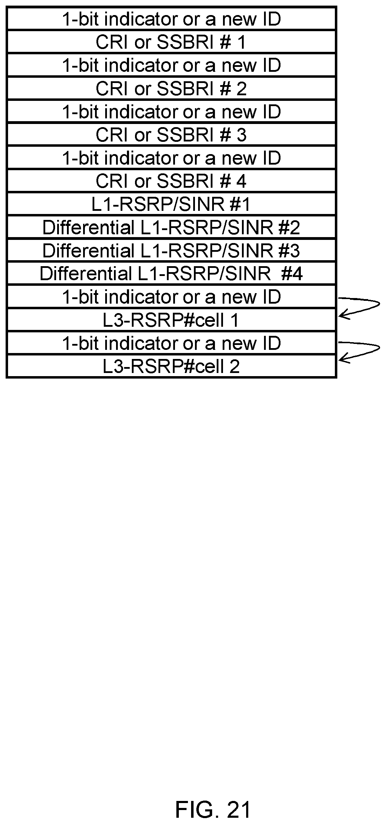

FIG. 21 is a diagram to show a first example of a CSI report in Option 2 and Option 3 of the fifth embodiment. In FIG. 21, an index (1-bit indicator or new ID described in the first embodiment) indicating the serving cell or the non-serving cell corresponding to each L3-RSRP value is mapped.

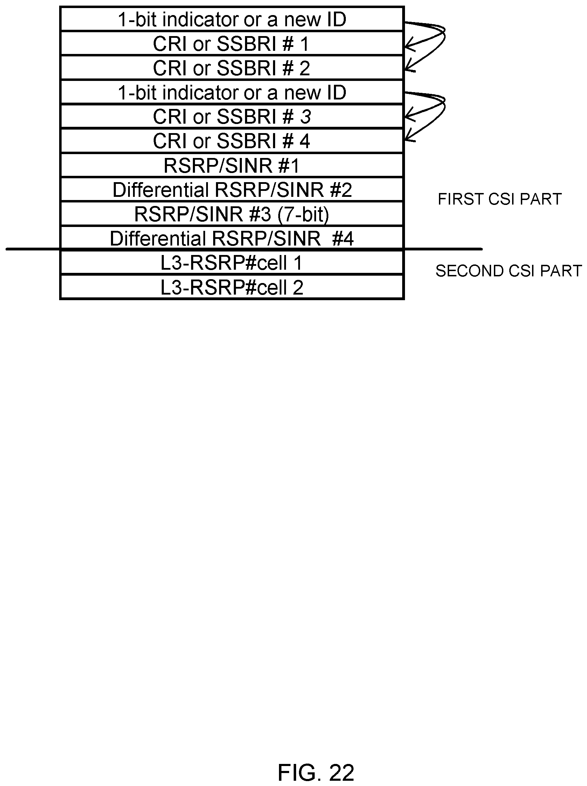

FIG. 22 is a diagram to show a second example of a CSI report in Option 2 and Option 3 of the fifth embodiment. FIG. 22 is similar to the example in FIG. 10 in the first embodiment except that L3-RSRPs are added. In other words, the UE first maps a report for an RS of the serving cell and subsequently maps a report for an RS of the non-serving cell, for CRIs or SSBRIs and L1-RSRP/SINR values. Also for L3-RSRPs, the UE first maps an L3-RSRP for an RS of the serving cell and subsequently maps an L3-RSRP for an RS of the non-serving cell, and hence a 1-bit indicator or new ID need not be mapped. As shown in FIG. 22, the CSI report may be divided into a first CSI part including CRIs or SSBRIs and L1-RSRP/SINR values and a second CSI part including L3-RSRPs.

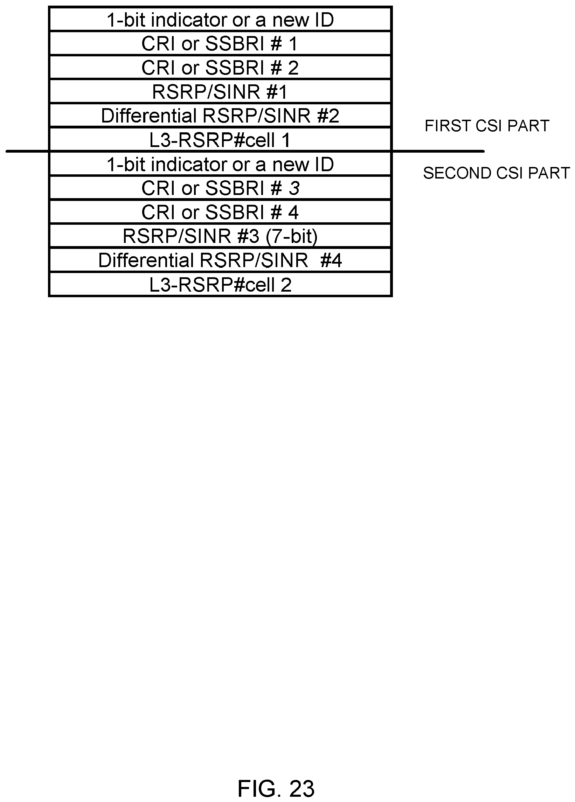

FIG. 23 is a diagram to show a third example of a CSI report in Option 2 and Option 3 of the fifth embodiment. A CRI or SSBRI, an L1-RSRP/SINR value, and an L3-RSRP value are mapped to a 1-bit indicator or new ID indicating the serving cell or the non-serving cell. As shown in FIG. 23, the CSI report may be divided into a first CSI part related to the serving cell and a second CSI part related to the non-serving cell.

When UCI payload has a size that cannot be transmitted (UCI payload size is larger than the size that can be transmitted by the UE or the coding rate of the UCI is larger than the maximum coding rate) and a new RRC parameter is used for indication, the second CSI parts in FIGS. 22 and 23 may be omitted/dropped.

In Option 2, "L3-RSRP#cell 2" may be acquired based on all the SSB beams from cell 2 according to an RRM measurement configuration.

In Option 3, "L3-RSRP#cell 2" may be acquired based on reported "CRI or SSBRI #3" and "CRI or SSBRI #4." "L3-RSRP#cell 2" may be acquired based on a CRI or an SSBRI configured in a CMR configuration in a CSI report configuration.

According to this embodiment, when both an RS of the serving cell and an RS of the non-serving cell are included in the same (one) CSI report configuration / CSI resource configuration, CSI reporting including an L3-RSRP in addition to an SSB index (SSBRI)/CRI and an L1-RSRP value / L1-SINR value can be appropriately controlled.

### <UE Capability>

The UE may transmit (report) at least one of the UE capabilities (UE capability information) in (1) to (8) below for the fourth and fifth embodiments. Note that the UE may transmit UE capability indicating whether to support at least one of the examples in the fourth and fifth embodiments without being limited to the following examples. Note that (1) to (7) are UE capabilities related to an L3-RSRP report mapped in a CSI report together with an L1 beam report.

(1) Whether to apply the L3-RSRP report to both the serving cell and the non-serving cell or only to the non-serving cell.
(2) The maximum number of cells (non-serving cells) in which L3-RSRP measurement/reporting for each UE / CC / BWP / CSI report is configured.
(3) Whether to support L3-RSRP measurement/reporting for each beam.
(4) Whether to support L3-RSRP measurement/reporting for each cell.
(5) Whether to support filtered L3-RSRP measurement/reporting for a reported/configured beam.
(6) Whether to support a beam configuration for L3-RSRP measurement/reporting by RRC / MAC CE.
(7) Whether to support additional report contents for the L3-RSRP report (for example, a re-indexed index indicating the non-serving cell, a CMR group ID, or a PCI PCI to be used directly).
(8) Whether to support omission/drop of L3-RSRP measurement/reporting.

### <Sixth Embodiment>

In a current specification, a UCI priority rule and a UCI omission rule are specified for UCI of a PUCCH/PUSCH. A beam report is given a higher priority than that for other pieces of UCI. However, it is not clear about the priority of a beam report (CSI report) including beam information of the non-serving cell.

Also as described in Aspect 1-3 of the first embodiment, indices for SSBs may be extended in the future. In other words, a beam report including information of both the serving cell and the non-serving cell may have a UCI size larger than that of a current beam report. In view of this, it is conceivable to determine the priorities as in Option 1 or 2 below.

### {Option 1}

Irrespective of whether information of the non-serving cell is included in UCI (such as an L1-RSRP), the same UCI priority rule or the same UCI omission rule may be specified for the UCI of the PUCCH/PUSCH. This allows direct application of the current specification.

### {Option 2}

In general, the same UCI priority rule and UCI omission rule are specified for the UCI of the PUCCH/PUSCH among different pieces of UCI. However, a higher priority is configured for the UCI for the serving cell than that for the UCI for the non-serving cell. The UCI for the serving cell is not omitted due to the UCI for the non-serving cell. This can prevent the UCI for the serving cell from not being able to be transmitted. This is because the UCI for the serving cell is more important and has a smaller number of UCI bits than the UCI for the non-serving cell.

According to this embodiment, it is possible to appropriately set a priority for a beam report including beam information of the non-serving cell.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

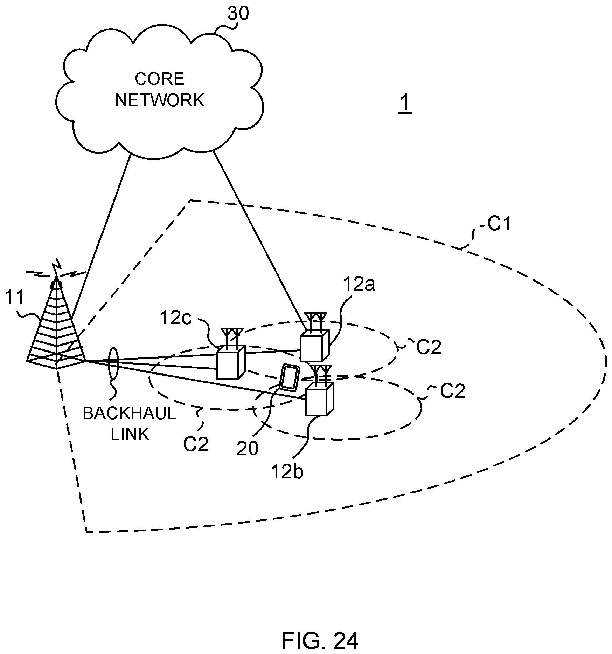

FIG. 24 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

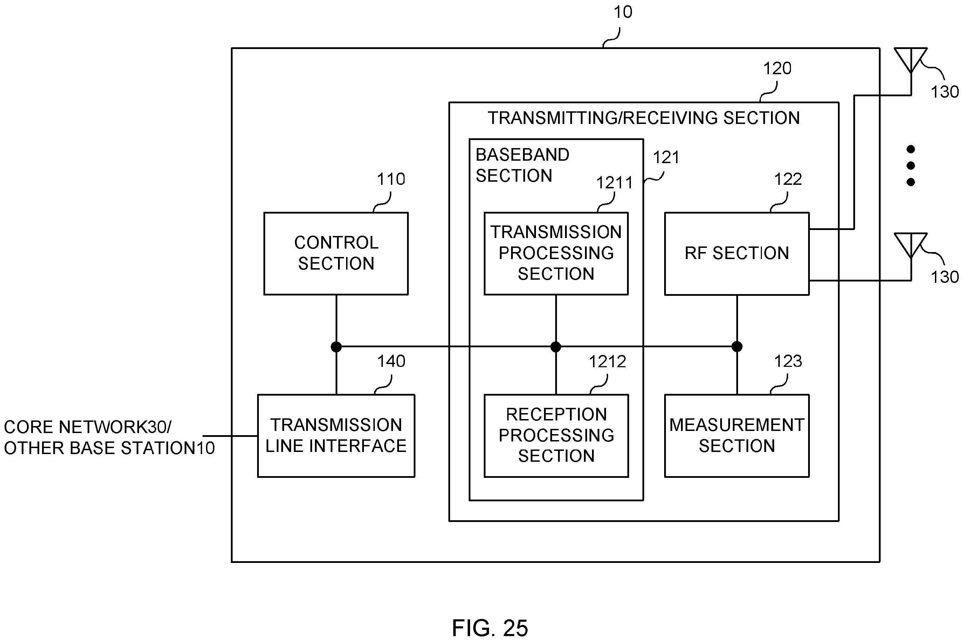

FIG. 25 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, demapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform
transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit one channel state information (CSI) report configuration including both a configuration of a reference signal of a serving cell and a configuration of a reference signal of a non-serving cell.

The control section 110 may control reception of a CSI report including information indicating the serving cell or the non-serving cell and transmitted based on the one CSI report configuration. In the CSI report, a report for the reference signal of the serving cell may be mapped first, and subsequently a report for the reference signal of the non-serving cell may be mapped.

When the one CSI report configuration includes different channel measurement resource (CMR) groups, the CSI report may include information indicating the serving cell or the non-serving cell in a report of each of the CMR groups. When the one CSI report configuration includes different channel measurement resource (CMR) groups, a report for the reference signal of the serving cell may be mapped first, and subsequently a report for the reference signal of the non-serving cell may be mapped, in a report of each of the CMR groups in the CSI report.

The transmitting/receiving section 120 may transmit one or more channel state information (CSI) report configurations including a configuration of a reference signal of a serving cell and a configuration of a reference signal of a non-serving cell.

The control section 110 may control reception of a CSI report including a reference signal received power in layer 3 (L3-RSRP) and transmitted based on the one or more CSI report configurations. When the configuration of the reference signal of the serving cell and the configuration of the reference signal of the non-serving cell are included in the CSI report configurations separate from each other, the CSI report may include the L3-RSRP for each cell or for each beam.

When both the configuration of the reference signal of the serving cell and the configuration of the reference signal of the non-serving cell are included in one of the one or more CSI report configurations, the CSI report may include information indicating the serving cell or the non-serving cell corresponding to the L3-RSRP. When both the reference signal of the serving cell and the reference signal of the non-serving cell are included in one of the one or more CSI report configurations, the L3-RSRP for the reference signal of the serving cell may be mapped first, and subsequently the L3-RSRP for the reference signal of the non-serving cell may be mapped, in the CSI report.

### (User Terminal)

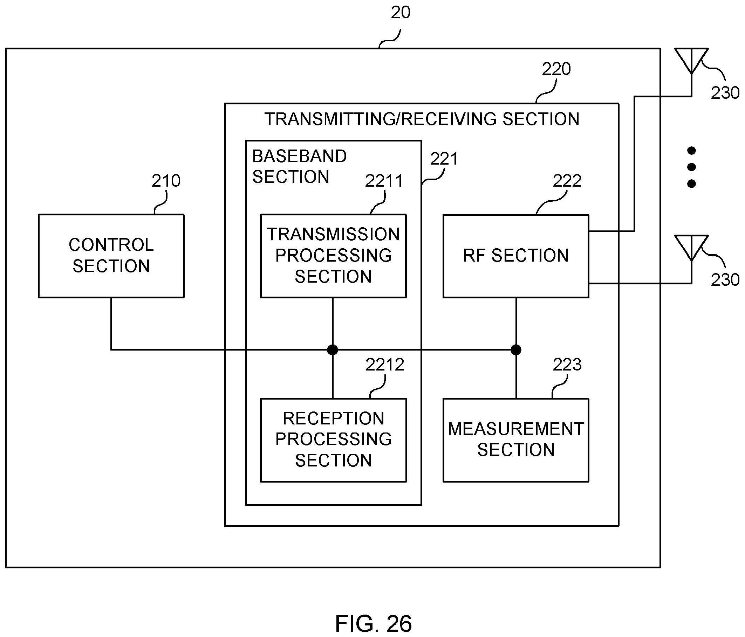

FIG. 26 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive one channel state information (CSI) report configuration including both a configuration of a reference signal of a serving cell and a configuration of a reference signal of a non-serving cell.

The control section 210 may control transmission of a CSI report including information indicating the serving cell or the non-serving cell, based on the one CSI report configuration. The control section 210 may first map a report for the reference signal of the serving cell and subsequently map a report for the reference signal of the non-serving cell, in the CSI report.

When the one CSI report configuration includes different channel measurement resource (CMR) groups, the CSI report may include information indicating the serving cell or the non-serving cell in a report of each of the CMR groups. When the one CSI report configuration includes different channel measurement resource (CMR) groups, the control section 210 may first map a report for the reference signal of the serving cell and subsequently map a report for the reference signal of the non-serving cell, in a report of each of the CMR groups in the CSI report.

Note that the transmitting/receiving section 220 may receive one or more channel state information (CSI) report configurations including a configuration of a reference signal of a serving cell and a configuration of a reference signal of a non-serving cell.

The control section 210 may control transmission of a CSI report including a reference signal received power in layer 3 (L3-RSRP), based on the one or more CSI report configurations. When the configuration of the reference signal of the serving cell and the configuration of the reference signal of the non-serving cell are included in the CSI report configurations separate from each other, the CSI report may include the L3-RSRP for each cell or for each beam.

When both the configuration of the reference signal of the serving cell and the configuration of the reference signal of the non-serving cell are included in one of the one or more CSI report configurations, the CSI report may include information indicating the serving cell or the non-serving cell corresponding to the L3-RSRP. When both the reference signal of the serving cell and the reference signal of the non-serving cell are included in one of the one or more CSI report configurations, the control section 210 may first map the L3-RSRP for the reference signal of the serving cell and subsequently map the L3-RSRP for the reference signal of the non-serving cell, in the CSI report.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

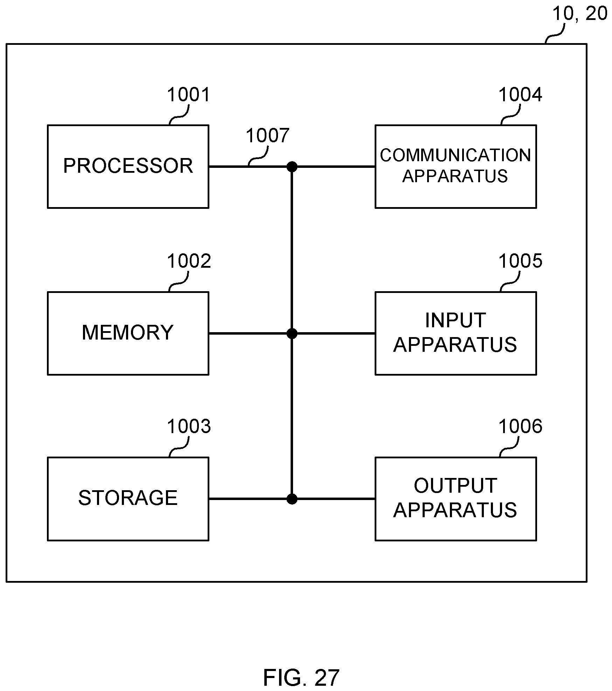

For example, a base station, a user terminal, and so on according to one embodiment of the present disclosure may function as a computer that executes the processes of the radio communication method of the present disclosure. FIG. 27 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware
(transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to -13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives one channel state information (CSI) report configuration including both a configuration of a reference signal of a serving cell and a configuration of a reference signal of a non-serving cell; and
a control section that controls transmission of a CSI report including information indicating the serving cell or the non-serving cell, based on the one CSI report configuration.

2. The terminal according to claim 1, wherein
the control section first maps a report for the reference signal of the serving cell and subsequently maps a report for the reference signal of the non-serving cell, in the CSI report.

3. The terminal according to claim 1, wherein
when the one CSI report configuration includes different channel measurement resource (CMR) groups, the CSI report includes information indicating the serving cell or the non-serving cell in a report of each of the CMR groups.

4. The terminal according to claim 1, wherein
when the one CSI report configuration includes different channel measurement resource (CMR) groups, the control section first maps a report for the reference signal of the serving cell and subsequently maps a report for the reference signal of the non-serving cell, in a report of each of the CMR groups in the CSI report.

5. A radio communication method for a terminal, the radio communication method comprising:
receiving one channel state information (CSI) report configuration including both a configuration of a reference signal of a serving cell and a configuration of a reference signal of a non-serving cell; and
controlling transmission of a CSI report including information indicating the serving cell or the non-serving cell, based on the one CSI report configuration.

6. A base station comprising:
a transmitting section that transmits one channel state information (CSI) report configuration including both a configuration of a reference signal of a serving cell and a configuration of a reference signal of a non-serving cell; and
a control section that controls reception of a CSI report including information indicating the serving cell or the non-serving cell and transmitted based on the one CSI report configuration.
